# EUROPEAN PATENT APPLICATION

(11) **EP 4 109 621 A1**
(43) Date of publication of application: **28.12.2022**
(21) Application number: 21919619.3
(22) Date of filing: 08.12.2021
(51) Int. Cl.: H01M 10/058, H01M 50/503, H01M 50/507, H01M 50/51, H01M 50/516, H01M 50/521, H01M 50/526, H01M 50/528, H01M 50/533, H01M 50/572

(54) **BATTERY MODULE AND METHOD FOR PRODUCING SAME**

(30) Priority: 15.01.2021 JP 2021005203
(71) Applicant: Envision AESC Japan Ltd., Zama-shi, Kanagawa 252-0012 (JP)
(72) Inventor: IZAWA, Takami, Zama-shi, Kanagawa 252-0012 (JP); YANAGIHARA, Yasuhiro, Zama-shi, Kanagawa 252-0012 (JP); NAKAI, Masayuki, Zama-shi, Kanagawa 252-0012 (JP); IGARASHI, Yui, Zama-shi, Kanagawa 252-0012 (JP); SAITO, Hideo, Zama-shi, Kanagawa 252-0012 (JP)
(74) Representative: Dennemeyer & Associates S.A.
(86) International application number: PCT/JP2021/045166
(87) International publication number: WO 2022/153730

(57) **Abstract**

Provided is a battery module configured so that connection among tabs and a bus bar stacked on each other is properly made. The battery module includes: multiple battery cells 10 each of which has tabs 101, 102; bus bars 152, 153 electrically connecting the battery cells to each other; and an electrical insulating bus bar holder 150 holding the bus bars 152, 153 such that the bus bars 152, 153 are arranged apart from each other in parallel. The bus bar holder 150 has, in regions adjacent to the bus bars 152, 153, slit openings 156b to 156e through which the tabs 101, 102 are drawn. The bus bars 152, 153 include plate-shaped tab connection portions standing on an outer peripheral surface of the bus bar holder 150 and joined to the tabs 101, 102.

## Description

### TECHNICAL FIELD

The present invention relates to a battery module and a method for manufacturing the battery module.

### BACKGROUND ART

For example, in a bus bar module described in Patent Literature 1, a plate-shaped bus bar is provided along an outer peripheral surface of a bus bar frame. A tip end portion of an electrode tab of a battery cell provided in the bus bar module is drawn in a cell longitudinal direction through a lead slot of the bus bar frame. Further, the tip end portion of the electrode tab is bent along the outer peripheral surface of the bus bar frame, i.e., a cell stack direction, so as to be stacked on the bus bar. The bent tip end portion and the bus bar are, in a stacked state, welded to each other by, e.g., laser welding.

### CITATION LIST

### PATENT LITERATURE

PATENT LITERATURE 1: JP-T-2019-500736

### SUMMARY OF INVENTION

### PROBLEMS TO BE SOLVED BY THE INVENTION

In a case where multiple electrode tabs are welded to a bus bar with the electrode tabs stacked on the bus bar, there is a probability that poor welding is caused due to clearances formed between the electrode tabs stacked on each other and between the bus bar and the electrode tab stacked on each other.

### SOLUTION TO PROBLEMS

(1) A battery module according to a first aspect of the present invention includes: multiple battery cells each of which has a positive electrode tab and a negative electrode tab; multiple bus bars electrically connecting the battery cells to each other; and an electrical insulating bus bar holding member holding the multiple bus bars such that the bus bars are provided apart from each other in parallel. The bus bar holding member has, in a region adjacent to each bus bar, an opening through which the tabs are drawn. Each bus bar includes a plate-shaped tab connection portion standing on an outer peripheral surface of the bus bar holding member and joined to the tabs.
(2) A battery module manufacturing method according to a second aspect of the present invention is for manufacturing the battery module according to the first aspect, and includes: sandwiching the tab connection portion and the multiple tabs by a sandwiching tool; and welding the tab connection portion and the multiple tabs to each other with the tab connection portion and the multiple tabs sandwiched by the sandwiching tool.

### EFFECTS OF INVENTION

According to the present invention, connection among the tabs and the bus bar stacked on each other can be properly made.

### BRIEF DESCRIPTION OF DRAWINGS

Fig. 1 shows a perspective view of a battery module of the present embodiment;
Fig. 2 shows an exploded perspective view of the battery module;
Fig. 3 shows a perspective view of the appearance of a battery cell;
Fig. 4 shows perspective views of a front bus bar module;
Fig. 5 shows a front view, an A-A sectional view, and a B-B sectional view of the front bus bar module;
Fig. 6 shows views for describing details of a rear bus bar module;
Fig. 7 shows a view for describing a connection form of multiple battery cells;
Fig. 8 shows views for describing pre-stage machining;
Fig. 9 shows views of part of a parallel-connected stack after the pre-stage machining;
Fig. 10 shows a flowchart of the outline of steps of assembling the battery module;
Fig. 11 shows views of a positional relationship among the front bus bar module, positive electrode tabs, and negative electrode tabs before and after attachment;
Fig. 12 shows views for describing movement of a sandwiching tool;
Fig. 13 shows a view from the direction of a C0 arrow in Fig. 12;
Fig. 14 shows a view from the direction of a C1 arrow in Fig. 13;
Fig. 15 shows a C2-C2 sectional view of Fig. 13;
Fig. 16 shows a view for describing reflected light upon laser welding;
Fig. 17 shows a view of a first variation;
Fig. 18 shows schematic views of the state of a welding portion in the case of laser welding;
Fig. 19 shows a view of the present embodiment and a comparative example;
Fig. 20 shows a view of a second variation;
Fig. 21 shows views of a third variation; and
Fig. 22 shows views for describing a fourth variation.

### DESCRIPTION OF EMBODIMENTS

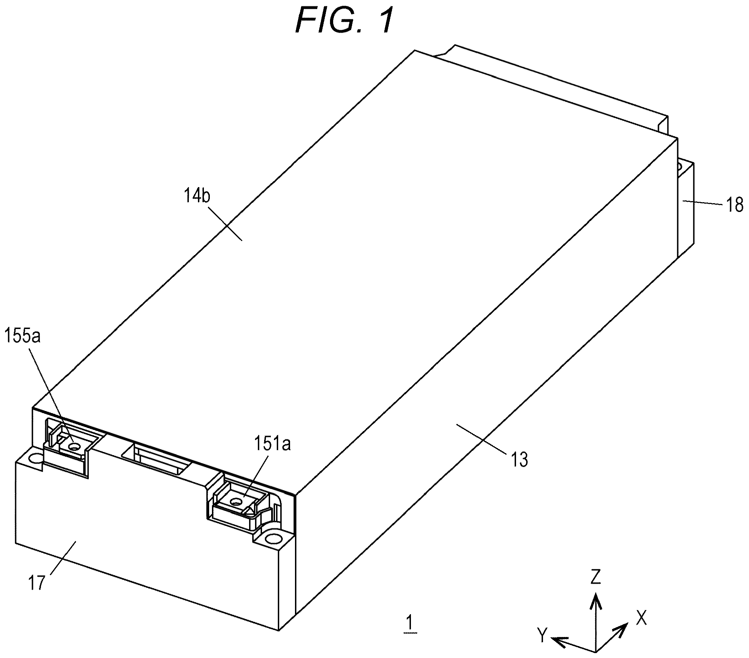

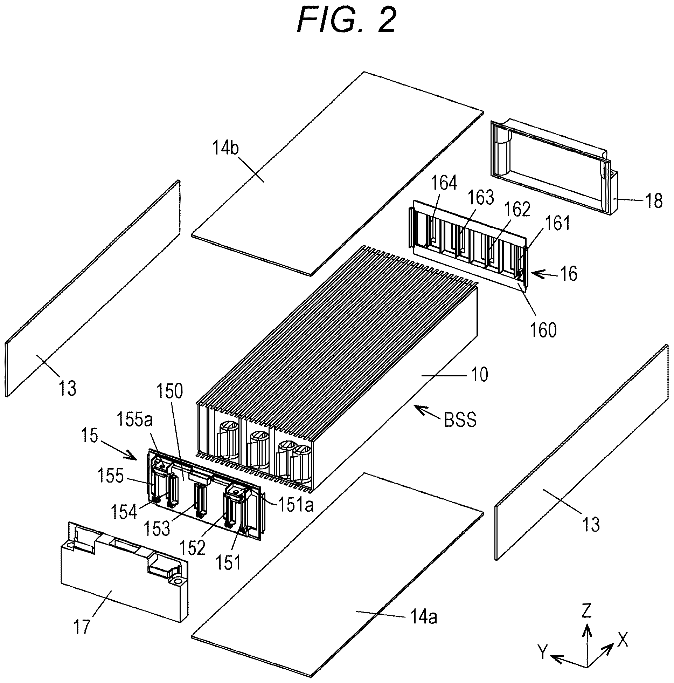

Fig. 1 shows a perspective view of a battery module 1 of the present embodiment. Fig. 2 shows an exploded perspective view of the battery module 1 shown in Fig. 1. In a case where the battery module 1 shown in Fig. 1 is mounted on, e.g., a vehicle such as an electric vehicle, the number of battery modules 1 corresponding to the vehicle and a sensor, a controller, and the like for monitoring and controlling each battery module 1 are, as a power source device (also called a battery pack) housed in a case corresponding to the vehicle, mounted on the vehicle. Hereinafter, when X-, Y-, and Z-axes are set as in Fig. 1, a negative X-axis direction will be referred to as a front side of the battery module 1, and a positive X-axis direction will be referred to as a read side. Moreover, an X-axis direction will be referred to as a cell longitudinal direction, a Y-axis direction will be referred to as a cell stack direction, and a Z-axis direction will be referred to as a cell lateral direction.

As shown in Fig. 2, the battery module 1 includes multiple battery cells (also called cells) 10 stacked on each other. The multiple battery cells 10 are stacked on each other in the Y-direction of the figure, thereby forming an integrated cell stack BSS. In an example shown in Fig. 2, 24 battery cells 10 are stacked on each other in the Y-direction. Note that the number of battery cells 10 is not limited to above. Although not shown in Fig. 2, a foam sheet is arranged between the battery cells 10. The foam sheet is an elastically-deformable member for absorbing expansion and contraction of the battery cell 10. As the foam sheet, one having adhesive force and formed in a sponge shape is used, for example. Moreover, the foam sheet also prevents shift of the battery cell 10 due to vibration.

On both side surfaces in the Y-direction, a bottom surface, and a top surface of the cell stack BSS including the multiple battery cells 10, side panels 13, a bottom panel 14a, and a top panel 14b forming a housing of the battery module 1 are provided. A front bus bar module 15 is provided on the front side of the cell stack BSS, and a rear bus bar module 16 is provided on the rear side of the cell stack BSS. The front bus bar module 15 includes; bus bars 151 to 155 joined to multiple tabs (later-described positive electrode tabs 101 and later-described negative electrode tabs 102) drawn to the front side of the cell stack BSS; and a bus bar holder 150 holding the bus bars 151 to 155. A negative electrode terminal 151a is provided at an upper end of the bus bar 151, and a positive electrode terminal 155a is provided at an upper end of the bus bar 155.

The rear bus bar module 16 includes bus bars 161 to 164 joined to multiple tabs drawn to the rear side of the cell stack BSS and a bus bar holder 160 holding the bus bars 161 to 164. Details of the front bus bar module 15 and the rear bus bar module 16 will be described later. A front end plate 17 is provided further on the front side of the front bus bar module 15. Similarly, a rear end plate 18 is provided further on the rear side of the rear bus bar module 16.

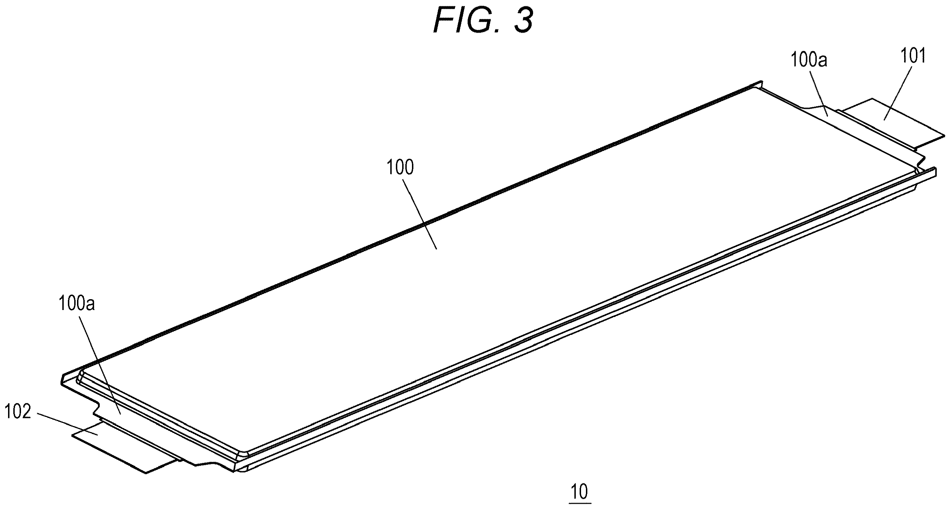

Fig. 3 shows a perspective view of the appearance of the battery cell 10. The battery cell 10 includes a cell body 100, the positive electrode tab 101, and the negative electrode tab 102. The cell body 100 is a flat lithium ion secondary battery configured such that a power generating element is sealed in a laminated film bag. The thin plate-shaped positive electrode tab 101 and the thin plate-shaped negative electrode tab 102 are electrically connected to the power generating element in the cell body 100, and are drawn from tab drawing portions 100a provided at both ends of the laminated film container of the cell body 100 to the outside.

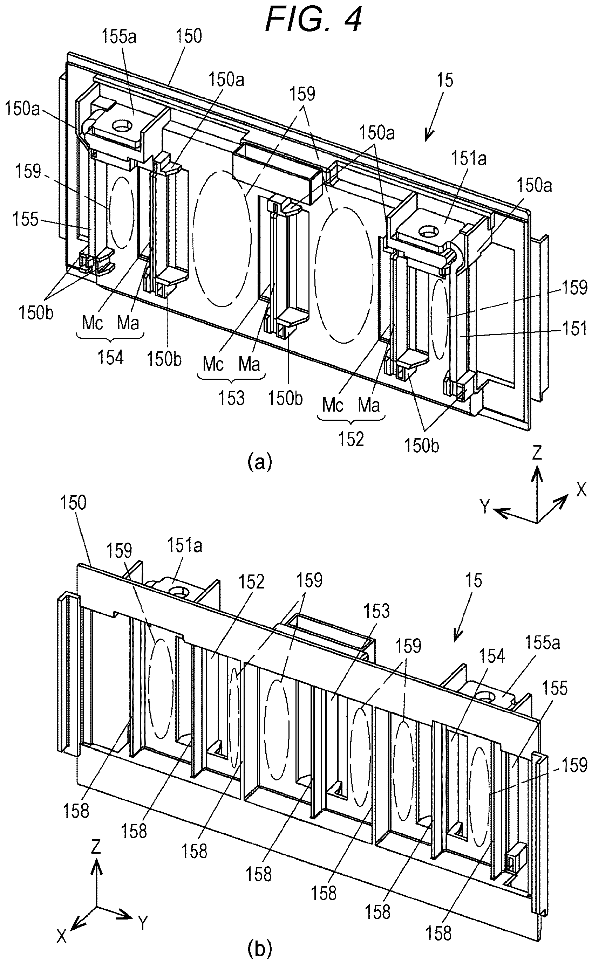

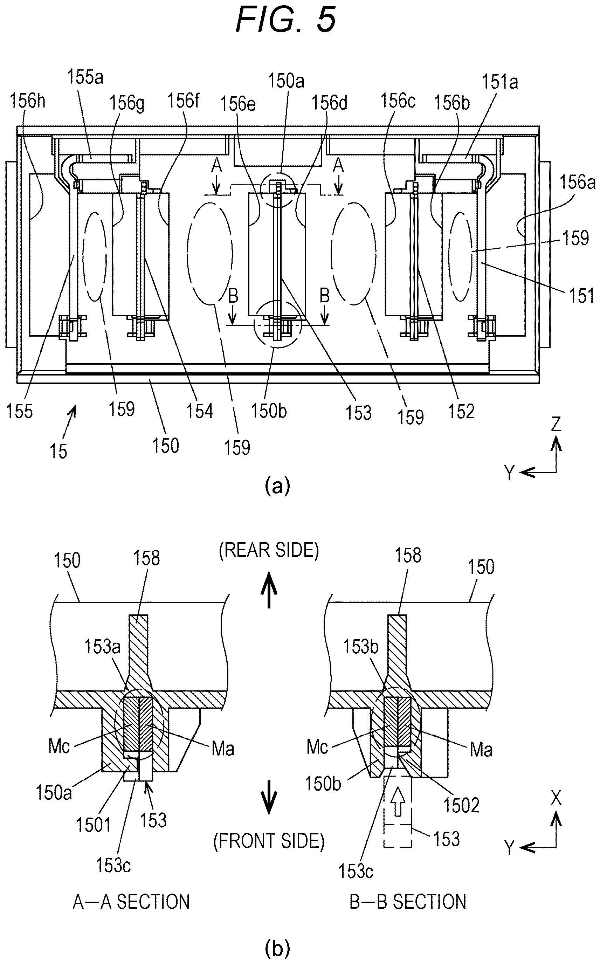

Figs. 4 and 5 show views of details of the front bus bar module 15. Figs. 4(a) and 4(b) are perspective views of the front bus bar module 15, Fig. 4(a) being the perspective view from the front side and Fig. 4(b) being the perspective view from the rear side. Fig. 5(a) is a view of the front bus bar module 15 from the front side, and Fig. 5(b) is an A-A sectional view and a B-B sectional view.

The bus bar holder 150 of the front bus bar module 15 is made of electrical insulating resin. As shown in Figs. 4(a) and 5(a), five pairs of bus bar holding portions 150a, 150b are provided on a front surface (an outer peripheral surface) of the bus bar holder 150. The above-described bus bars 151 to 155 are each held by the pairs of upper and lower bus bar holding portions 150a, 150b. The bus bar 151 provided with the negative electrode terminal 151a is made of a copper material. The bus bar 155 provided with the positive electrode terminal 155a is made of an aluminum material. The bus bars 152 to 154 are made of a clad material of a copper material Mc and an aluminum material Ma joined to each other.

As shown in the A-A sectional view of Fig. 5(b), the width dimension (the bus bar width dimension) of an upper end portion 153a of the bus bar 153 in the X-axis direction (the cell longitudinal direction) is set smaller than a tab connection portion 153c to which the tabs are to be joined. Three of four side surfaces of the upper end portion 153a contact the ring-shaped bus bar holding portion 150a, and are stopped in the bus bar holding portion 150a by a claw 1501 of the bus bar holding portion 150a. Similarly, as shown in the B-B sectional view of Fig. 5(b), the width dimension of a lower end portion 153b of the bus bar 153 in the X-axis direction is set smaller than a tab connection portion 153c. Three of four side surfaces of the lower end portion 153b contact the ring-shaped bus bar holding portion 150b, and are stopped in the bus bar holding portion 150b by a claw 1502 of the bus bar holding portion 150b. Similar bus bar holding portions 150a, 150b are also provided for the other bus bars 151, 152, 154, 155.

For example, in a case where the bus bar 153 is attached to the bus bar holding portions 150a, 150b, the upper end portion 153a of the bus bar 153 is inserted into the bus bar holding portion 150a from below, and subsequently, the lower end portion 153b of the bus bar 153 is pushed into the bus bar holding portion 150b from the front side as indicated by an arrow in Fig. 5(b). The claw 1502 of the bus bar holding portion 150b is deformed so as to expand outward when the bus bar 153 is pushed in, and accordingly, the bus bar 153 is inserted into the bus bar holding portion 150b.

As shown in Fig. 5(a), eight slit openings 156a to 156h are formed at the bus bar holder 150. The slit openings 156a to 156h are openings for drawing the positive electrode tabs 101 and the negative electrode tabs 102 of the cell stack BSS to the front side of the bus bar holder 150. The slit opening 156a is arranged on the right side of the bus bar 151 as viewed in the figure, and the slit opening 156h is arranged on the left side of the bus bar 155 as viewed in the figure. Similarly, the slit openings 156b, 156c are arranged on both sides of the bus bar 152, the slit openings 156d, 156e are arranged on both sides of the bus bar 153, and the slit openings 156f, 156g are arranged on both sides of the bus bar 154.

Light shielding portions 159 for preventing laser light and reflected light thereof from entering the housing upon laser welding are formed between the bus bar 151 and the slit opening 156b, between the slit opening 156c and the slit opening 156d, between the slit opening 156e and the slit opening 156f, and between the slit opening 156g and the bus bar 155. Further, dividing portions 158 for preventing contact between the positive electrode tab 101 and the negative electrode tab 102 adjacent to each other are formed so as to protrude from a rear surface (a battery-cell-side inner peripheral surface) of the bus bar holder 150. Note that oval regions indicated by dashed lines in Fig. 5(a) are regions, in the light shielding portions 159, having a function of shielding unnecessary laser light and are shown in an oval shape for the sake of convenience.

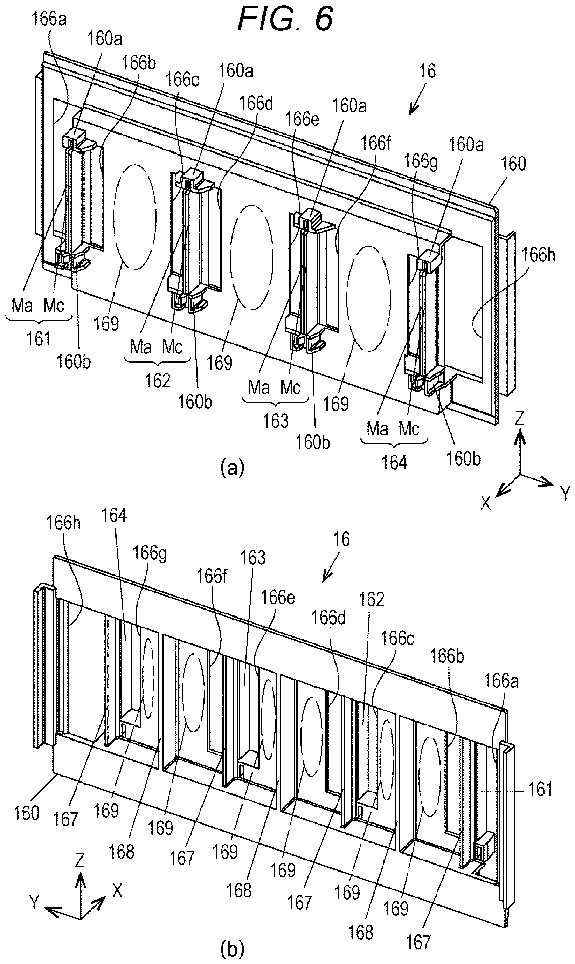

Fig. 6 shows views of details of the rear bus bar module 16, Fig. 6(a) being a perspective view from the rear side (the positive X-direction) and Fig. 6(b) being a perspective view from the front side (the negative X-direction). The bus bar holder 160 of the rear bus bar module 16 is made of electrical insulating resin. As shown in Fig. 6(a), four pairs of bus bar holding portions 160a, 160b for holing the bus bars 161 to 164 are provided on a rear surface (an outer peripheral surface on the side opposite to the battery cells 10) of the bus bar holder 160. Claws for stopping the bus bars 161 to 164 as in the case of the bus bar holding portions 150a, 150b are also provided at the ring-shaped bus bar holding portions 160a, 160b. The bus bars 161 to 164 are made of a clad material of a copper material Mc and an aluminum material Ma joined to each other.

In the case of the rear bus bar module 16, slit openings 166a to 166h are formed such that adjacent ones of the slit openings 166a to 166h are on both sides of the bus bar holder 160. Light shielding portions 169 are formed between the slit opening 166b and the bus bar 162, between the slit opening 166d and the slit opening 166e, and between the slit opening 166f and the slit opening 166g. Further, dividing portions 168 for preventing contact between the positive electrode tab 101 and the negative electrode tab 102 adjacent to each other are formed so as to protrude from a front surface (a battery-cell-side inner peripheral surface) of the bus bar holder 160.

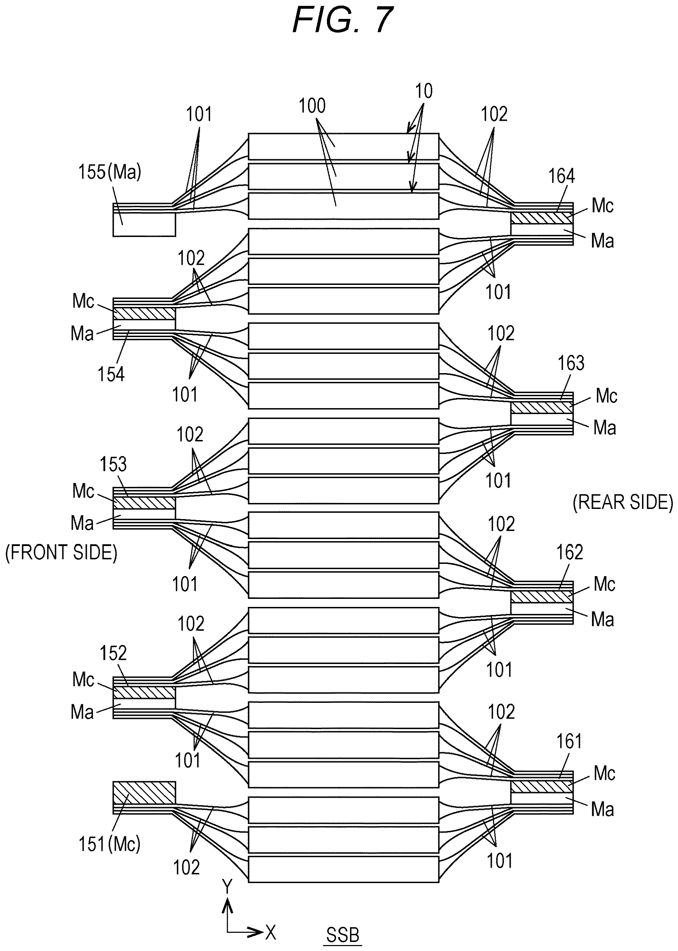

Fig. 7 shows a view for describing a connection form of the multiple battery cells 10 provided in the battery module 1. In an example shown in Fig. 7, 24 battery cells 10 are provided. These 24 battery cells 10 are connected to each other by the bus bars 151 to 155 and the bus bars 161 to 164 in a three-parallel eight-series form. In this example, the battery cells 10 arranged in the up-down direction (the Y-direction) as viewed in the figure will be referred to as first, second, ... , twenty-fourth battery cells 10 in this order from the bottom as viewed in the figure. The first to third battery cells 10, the seventh to ninth battery cells 10, the thirteenth to fifteenth battery cells 10, and the nineteenth to twenty-first battery cells 10 are arranged such that the positive electrode tabs 101 are on the rear side and the negative electrode tabs 102 are on the front side. The fourth to sixth battery cells 10, the tenth to twelfth battery cells 10, the sixteenth to eighteenth battery cells 10, and the twenty-second to twenty-fourth battery cells 10 are arranged such that the positive electrode tabs 101 are on the front side and the negative electrode tabs 102 are on the rear side.

Of the first to third battery cells 10, the negative electrode tabs 102 are connected to the bus bar 151 (the copper material Mc), and the positive electrode tabs 101 are connected to the aluminum material Ma of the bus bar 161. Thus, the first to third battery cells 10 are connected in parallel. Of the fourth to sixth battery cells 10, the negative electrode tabs 102 are connected to the copper material Mc of the bus bar 161, and the positive electrode tabs 101 are connected to the aluminum material Ma of the bus bar 152. Thus, the fourth to sixth battery cells 10 are connected in parallel, and are connected in series with the first to third battery cells 10 connected in parallel. Similarly, for the seventh to ninth battery cells 10, the tenth to twelfth battery cells 10, thirteenth to fifteenth battery cells 10, the sixteenth to eighteenth battery cells 10, the nineteenth to twenty-first battery cells 10, and the twenty-second to twenty-fourth battery cells 10, every three of these battery cells 10 are connected in parallel, and the groups of the battery cells connected in parallel are sequentially connected in series. Hereinafter, three battery cells 10 connected in parallel will be referred to as a parallel-connected stack, and a stack of multiple parallel-connected stacks connected in series will be referred to as the cell stack BSS. In the three-parallel eight-series cell stack BSS, the negative electrode terminal 151a is provided at the bus bar 151 connected to one end of the cell stack BSS, and the positive electrode terminal 155a is provided at the bus bar 155 connected to the other end of the cell stack BSS. Note that the number of battery cells 10 is not limited to 24. Moreover, the connection is not limited to the three-parallel eight-series connection, and the number of battery cells 10 connected in parallel and the number of battery cell groups connected in series are not limited to above.

In three battery cells 10 of the parallel-connected stack, each positive electrode tab 101 is connected so as to be stacked on one surface (a surface of the aluminum material Ma) of the bus bar, and each negative electrode tab 102 is connected so as to be stacked on one surface (a surface of the copper material Mc) of the bus bar on the opposite side. For example, each negative electrode tab 102 of the first to third battery cells 10 is connected to the lower side surface of the bus bar 151 as viewed in the figure, and each positive electrode tab 101 is connected to the aluminum-material-Ma-side surface of the bus bar 161. Thus, each positive electrode tab 101 and each negative electrode tab 102 are bent toward the bus bars to which these tabs are to be connected.

In the present embodiment, the positive electrode tabs 101 and the negative electrode tabs 102 are bent in advance at a stage before stacking, and the positive electrode tabs 101 of the multiple battery cells 10 to be connected in parallel are temporarily fixed and integrated, and the negative electrode tabs 102 of these battery cells 10 are temporarily fixed and integrated. By such pre-stage machining, workability and safety in a course from a stacking step to a step of connecting the tabs to the bus bars of the bus bar module can be improved.

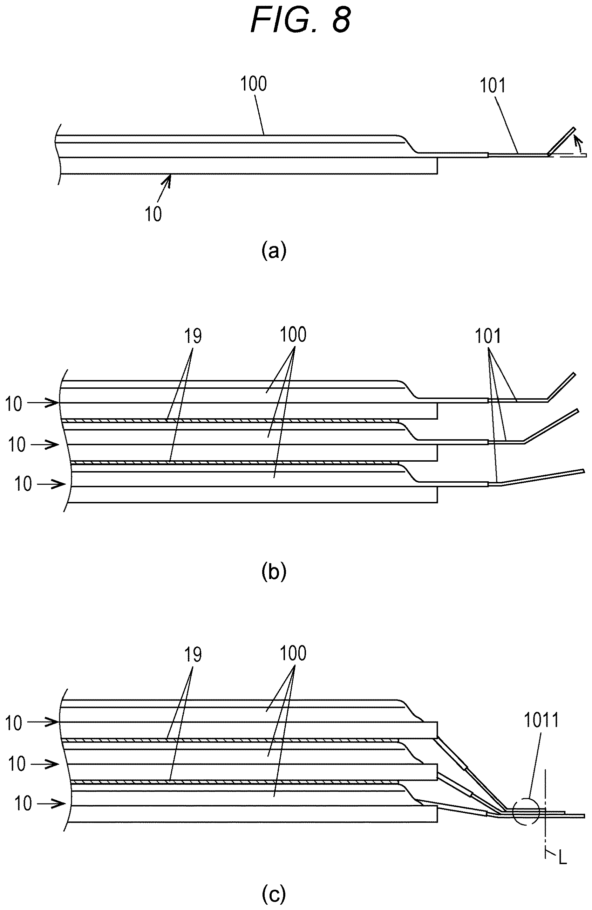

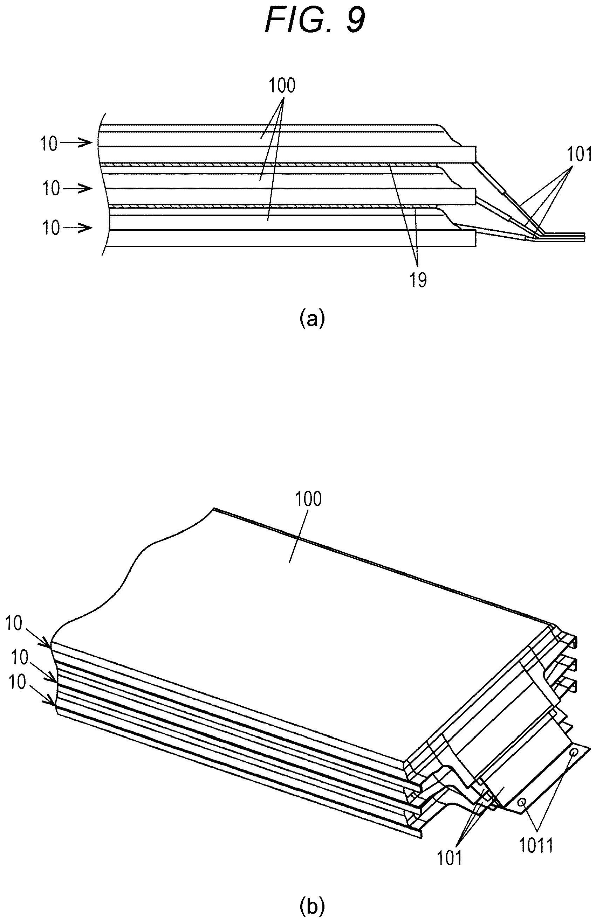

Figs. 8 and 9 show views for describing the pre-stage machining. First, for forming the cell stack BSS, three battery cells 10 to be connected in parallel are stacked on each other, and in the this manner, the parallel-connected stack is formed. Before such stacking, the positive electrode tab 101 and the negative electrode tab 102 of each battery cell 10 are bent in predetermined shapes.

Fig. 8(a) shows a view of a positive electrode tab side of the first battery cell 10 shown in Fig. 7. A tip end portion of the positive electrode tab 101 is bent upward as viewed in the figure from a state indicated by a dashed line. Fig. 8(b) shows a view of the positive electrode tab side of three battery cells 10 stacked on each other after tab bending. The first, second, and third battery cells 10 are arranged in this order from the top as viewed in the figure. An elastically-deformable foam sheet 19 is arranged between every adjacent ones of the battery cells 10. The foam sheet 19 is a member for absorbing expansion and contraction of the battery cell 10 when the battery cell 10 expands and contracts upon use of the battery. Moreover, the foam sheet 19 also has a function of preventing position shift of the battery cell 10. A positional relationship of each battery cell 10 with the bus bar to which such a battery cell 10 is to be connected varies. Thus, each positive electrode tab 101 is bent in a shape corresponding to the positional relationship. As a result, the bending angle of the tip end portion of each tab is set greater with an increase in the distance of the cell from the bus bar. A surface of the tab tip end to be joined to the bus bar expands in a cell extending direction.

In a step shown in Fig. 8(c), the tip end portions of three positive electrode tabs 101 are stacked on each other, and are temporarily fixed at a portion (hereinafter referred to as a temporary fixing portion 1011) indicated by a reference sign 1011. A temporary fixing method to be used may include fastening with a clip, swaging, and tack welding. After temporary fixing, the tip end portions are cut at, e.g., a position indicated by a reference sign L for the purpose of trimming the tip ends of the temporarily-fixed positive electrode tabs 101. Fig. 9(a) shows a view similar to Fig. 8(c), showing a state after tip end cutting. Fig. 9(b) shows a perspective view.

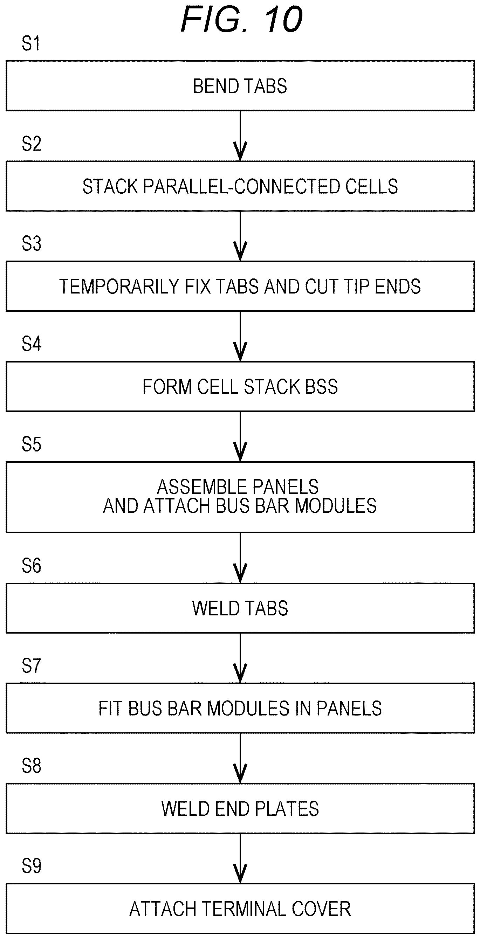

Fig. 10 shows a flowchart of the outline of steps of assembling the battery module 1. First, in Step S1, the positive electrode tabs 101 and the negative electrode tabs 102 of the battery cells 10 shown in Fig. 8(a) are bent. In Step S2, the multiple battery cells 10 to be connected in parallel are stacked on each other as shown in Fig. 8(b). In Step S3, the positive electrode tabs 101 are temporarily fixed and the negative electrode tabs 102 are temporarily fixed, and the tip ends thereof are cut, as shown in Fig. 8(c). Note that such tip end cutting may be performed upon bending in Step S1. In Step S4, the parallel-connected stacks corresponding to the number of series connections are stacked on each other, thereby forming the cell stack BSS as shown in Fig. 2. The elastically-deformable foam sheet 19 is arranged between every adjacent ones of the parallel-connected stacks.

In Step S5, the panels forming the housing are assembled, and the bus bar modules are attached. Specifically, the side panels 13 are arranged on both side surfaces of the cell stack BSS, the bottom panel 14a is arranged on the bottom of the cell stack BSS, and the top panel 14b is arranged on the top of the cell stack BSS (see Fig. 2). Then, these panels are welded to each other. Thereafter, the front bus bar module 15 is attached to the front side of the panels 13, and the rear bus bar module 16 is attached to the rear side of the panels 13. In Step S6, the temporarily-fixed positive electrode tabs 101 and the temporarily-fixed negative electrode tabs 102 are welded to the front bus bar module 15 and the rear bus bar module 16.

In Step S7, the front bus bar module 15 and the rear bus bar module 16 are fitted in the panels 13. In Step S8, the front end plate 17 and the rear end plate 18 are welded to the bottom panel 14a and the top panel 14b. In Step S9, a terminal cover for protecting the positive electrode terminal 155a and the negative electrode terminal 151a is attached. Note that the terminal cover is not shown in Fig. 2.

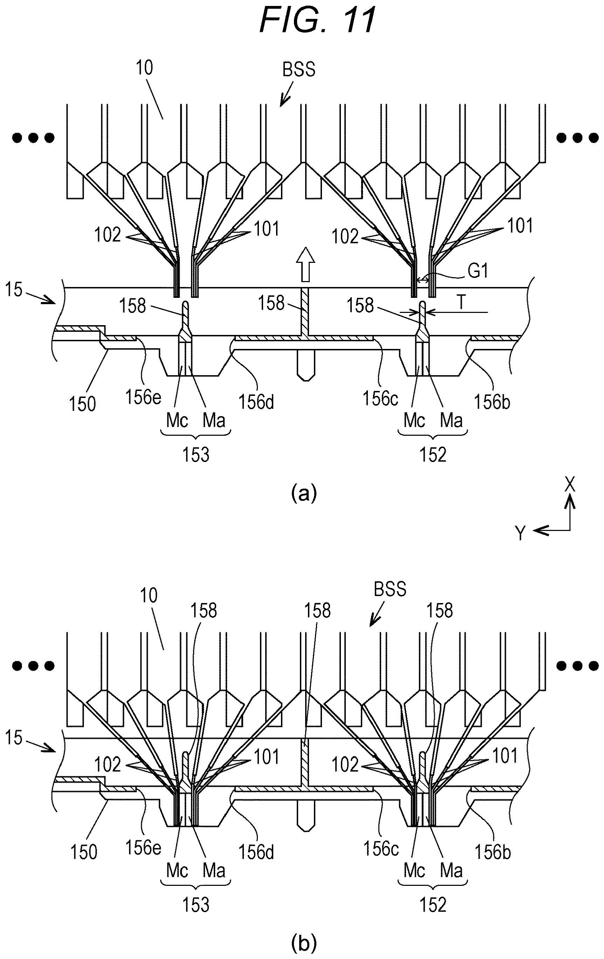

Hereinafter, attachment of the bus bar modules in Step S5 and welding of the tabs in Step S6 will be described in detail by taking the front bus bar module 15 as an example. Note that description regarding the rear bus bar module 16 is similar to that in the case of the front bus bar module 15, and therefore, will be omitted. Fig. 11 shows sectional views of a positional relationship among the front bus bar module 15 and the positive electrode tabs 101 and the negative electrode tabs 102 of the cell stack BSS when the front bus bar module 15 is attached to the housing front side, showing part of the front bus bar module 15 and the cell stack BSS along a plane parallel with an XY plane. Fig. 11(a) shows a state before the front bus bar module 15 is attached, and Fig. 11(b) shows a state after the front bus bar module 15 has been attached.

As shown in Fig. 11(a), two parallel-connected stacks, each of which includes three battery cells 10 connected in parallel, are connected to each of the bus bars 152, 153 made of the clad material of the aluminum material Ma and the copper material Mc. The positive electrode tabs 101 of one of the parallel-connected stacks are connected to an aluminum material Ma side of the bus bar, and the negative electrode tabs 102 of the other parallel-connected stack are connected to a copper material Mc side of the bus bar. As described above, three positive electrode tabs 101 are bent in the predetermined shape in advance, and the tip end portions thereof are temporarily fixed. The same also applies to the negative electrode tabs 102. As shown in Fig. 11(a), a clearance is formed between the group of the temporarily-fixed positive electrode tabs 101 and the group of the temporarily-fixed negative electrode tabs 102. The dimension of such a clearance G1 is set substantially equal to or slightly greater than the thickness of the bus bar.

When the front bus bar module 15 is attached to the front side of the housing, the front bus bar module 15 is moved in a direction (toward the cell stack BSS) indicated by an arrow in Fig. 11(a). As a result, as shown in Fig. 11(b), the bus bar 152, 153 is inserted into the clearance between the groups of the positive and negative electrode tabs 101, 102 to be connected to the bus bar 152, 153. Accordingly, the positive electrode tabs 101 face the surface of the aluminum material Ma of the bus bar 152, 153, and the negative electrode tabs 102 face the surface of the copper material Mc of the bus bar 152, 153. The rear-side thickness dimension T of the dividing portion 158 provided so as to contact the rear side of the bus bar 152, 153 is set smaller than the thickness dimension of the bus bar 152, 153. Thus, even if the position of the clearance between the tab groups is slightly shifted in the Y-direction, the dividing portion 158 on the rear side of the bus bar 152, 153 enters the clearance between the tab groups, and functions as a guide for guiding the bus bar 152, 153 to side surfaces of the positive electrode tab 101 and the negative electrode tab 102.

The tabs with the same polarity are temporarily fixed as shown in Fig. 9 so that contact between adjacent tabs with different polarities and contact of the positive and negative electrodes with a peripheral component when the parallel-connected stacks are stacked on each other and when the front bus bar module 15 and the rear bus bar module 16 are attached to the panels 13 as shown in Fig. 11 can be avoided. Moreover, the tabs with the same polarity are temporarily fixed so that the positive electrode tabs 101 and the negative electrode tabs 102 can be easily inserted into the slit openings 156a to 156h, 166a to 166g of the bus bar holders 150, 160 when the front bus bar module 15 and the rear bus bar module 16 are attached to the panels 13 and can be smoothly drawn to the front side and the rear side through the slit openings 156a to 156h, 166a to 166g.

### (Sandwiching by Sandwiching Tool)

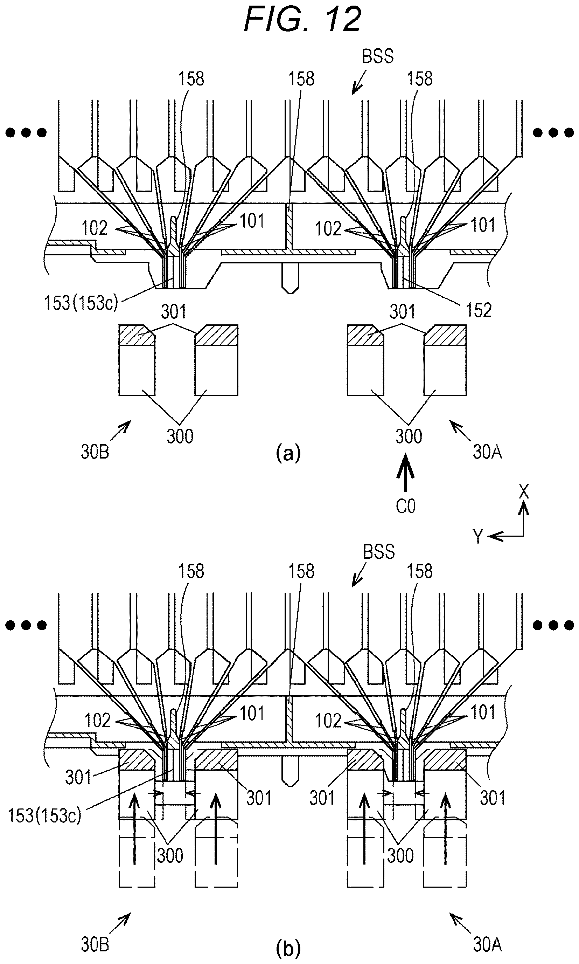

In the present embodiment, in the welding process in Step S6 of Fig. 10, a sandwiching tool that sandwiches the bus bar and the tabs is used. Figs. 12(a) and 12(b) show views for describing movement of the sandwiching tool. Figs. 12(a) and 12(b) show, in closeup, a portion of the front bus bar module 15 including the bus bars 152, 153. When the front bus bar module 15 is attached to the panels 13, the temporarily-fixed positive electrode tabs 101 of three battery cells 10 to be connected are arranged in the vicinity of the aluminum material Ma (on the right side as viewed in the figure) of the bus bar 152. On the other hand, the temporarily-fixed negative electrode tabs 102 of three battery cells 10 to be connected are arranged in the vicinity of the copper material Mc (on the left side as viewed in the figure) of the bus bar 152. The same also applies to the bus bar 153. Only the temporarily-fixed negative electrode tabs 102 of three battery cells 10 to be connected are arranged in the vicinity of the bus bar 151 made of the copper material Mc, and only the temporarily-fixed positive electrode tabs 101 of three battery cells 10 to be connected are arranged in the vicinity of the bus bar 155 made of the aluminum material Ma.

In a case where the multiple tabs stacked on each other are welded to the bus bar by laser welding, it is important that no clearances are formed between the tabs and between the tab and the bus bar in order to obtain a proper joint state. In the present embodiment, the multiple temporarily-fixed tabs and the bus bar are sandwiched by a sandwiching tool 30A, 30B. Thus, sandwiching can be performed with sufficiently-great force without influence of a strength of holding the bus bars 151 to 155 by the bus bar holder 150. As a result, the clearances between the tabs and between the tab and the bus bar upon welding can be prevented, and a proper welding state can be obtained.

The sandwiching tools 30A, 30B are loaded on the front side of the bus bars 152, 153. Although not shown in the figure, sandwiching tools are each loaded for the other bus bars. The sandwiching tool 30A, 30B includes a pair of arms 300. A sandwiching portion 301 is provided at a tip end of each arm 300. Details of the arm 300 will be described later. Note that the sandwiching portions 301 extend long in the Z-direction (a direction from the front to the back of the plane of paper) so as to sandwich the entirety of welding regions of the bus bar 151, 152.

Subsequently, as shown in Fig. 12(b), the sandwiching tool 30A, 30B is driven in the positive X-direction, and in this manner, the sandwiching portions 301 of the arms 300 are moved to the sides of the bus bar 152, 153. As a result, the pair of sandwiching portions 301 of the sandwiching tool 30A is positioned at such a position that the sandwiching portions 301 sandwich the positive electrode tabs 101, the bus bar 152, and the negative electrode tabs 102. Similarly, the pair of sandwiching portions 301 of the sandwiching tool 30B is positioned at such a position that the sandwiching portions 301 sandwich the positive electrode tabs 101, the bus bar 153, and the negative electrode tabs 102.

Thereafter, the right arm 300 of the sandwiching tool 30A, 30B as viewed in the figure is driven in the positive Y-direction and the left arm 300 of the sandwiching tool 30A, 30B as viewed in the figure is driven in the negative Y-direction, and accordingly, the pair of arms 300 is closed. As a result, the bus bar 152 and the positive electrode tabs 101 and the negative electrode tabs 102 arranged on both sides thereof are sandwiched by the sandwiching portions 301 of the sandwiching tool 30A in the stack direction (the Y-direction), and closely contact each other. That is, the positive electrode tabs 101 closely contact one surface of the bus bar 152, and the negative electrode tabs 102 closely contact the other surface of the bus bar 152. The bus bar 153 and the positive electrode tabs 101 and the negative electrode tabs 102 arranged on both sides thereof are also sandwiched by the sandwiching portions 301 of the sandwiching tool 30B in the stack direction (the Y-direction), and closely contact each other.

The bus bar 151, 152 is held by the bus bar holding portions 150a, 150b of the resin bus bar holder 150. Thus, the holding strength of the bus bar holding portions 150a, 150b depends on the strength of the resin material. The structure of the present embodiment is a structure of sandwiching the bus bar and the tabs by the sandwiching portions 301. Thus, the multiple tabs can be strongly pressed against the surfaces of the bus bar without influence of the material strength of the bus bar holding portions 150a, 150b. As a result, the clearances between the tabs stacked on each other and between the tab and the bus bar stacked on each other can be prevented.

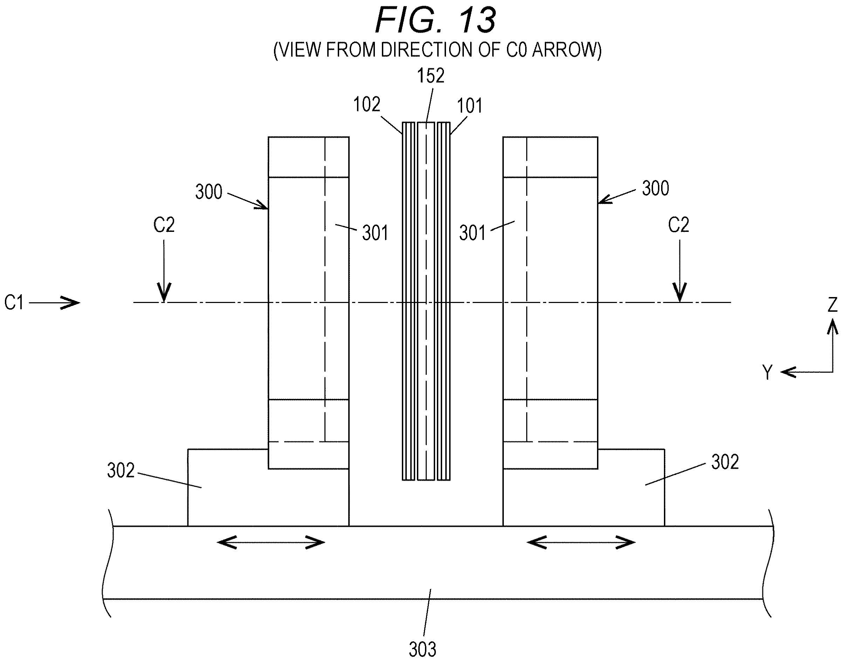

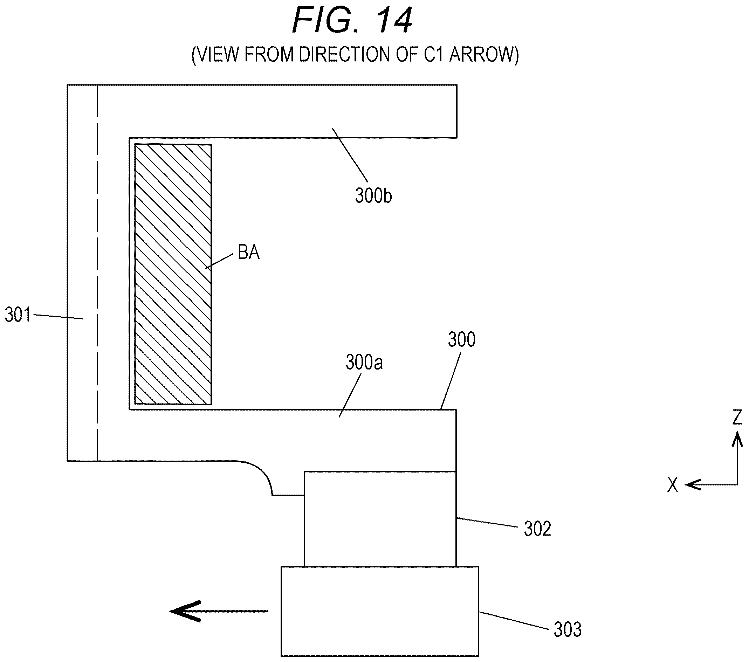

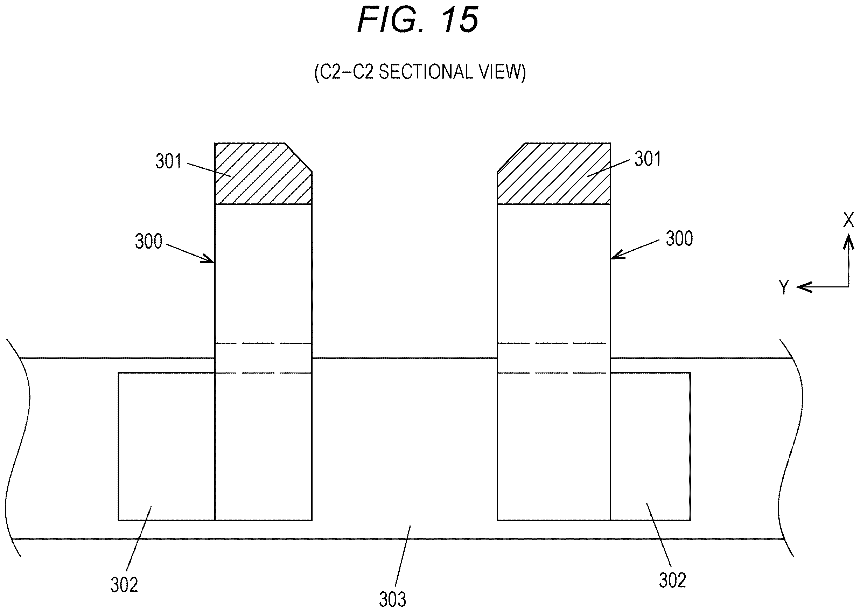

Figs. 13 to 15 show views of details of the sandwiching tool 30A. Fig. 13 shows a view from the direction of a C0 arrow in Fig. 12(a). Fig. 14 shows a view from the direction of a C1 arrow in Fig. 13. Fig. 15 shows a C2-C2 sectional view of Fig. 13. Each arm 300 provided at the sandwiching tool 30A is fixed onto a base 302. The base 302 is configured to slidably move in the Y-direction on a rail 303 (see Fig. 15) extending in the Y-direction. In the case of closing the arms 300, the base 302 for the left arm 300 as viewed in the figure is moved in the negative Y-direction, and the base 302 for the right arm 300 as viewed in the figure is moved in the positive Y-direction. Accordingly, the positive electrode tabs 101, the bus bar 152, and the negative electrode tabs 102 are sandwiched by the pair of sandwiching portions 301.

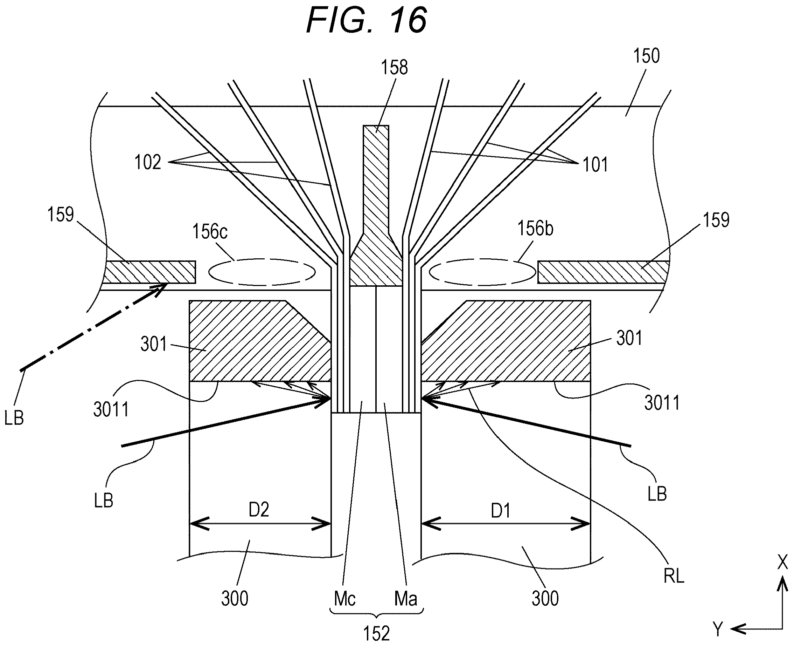

As shown in Fig. 14, the arm 300 includes a pair of horizontal portions 300a, 300b extending in the X-direction and the sandwiching portion 301 extending in the Z-direction so as to couple tip ends of the horizontal portions 300a, 300b to each other. When welding is performed using laser light as shown in Fig. 16 as described later, the laser light passes through a hatched region BA. By movement in the positive X-direction on the rail 303, the arms 300 of the sandwiching tool 30A are moved to both sides of the bus bar 152 as shown in Fig. 12(b).

Fig. 16 shows a view for describing reflected light upon laser welding. In the case of welding with laser light, beams LB preferably enter perpendicularly (an incident angle = 0 degrees) to the positive electrode tabs 101 and the negative electrode tabs 102, i.e., enter along the Y-axis. However, in the front bus bar module 15, the multiple bus bars 151 to 155 are arranged in parallel in the Y-axis direction. For this reason, it is difficult to cause the beams LB to enter along the Y-axis. Thus, as shown in Fig. 16, the bus bar 152 is irradiated diagonally with the beams LB at an angle of the incident angle > 0.

In a case where the beams LB diagonally enter as described above, if a beam direction is shifted as indicated by a chain line, there is a probability that the battery cells 10 are irradiated with the laser light due to entrance of the beam LB into a region where the battery cells 10 are housed or entrance of reflected light RL into the region where the battery cells 10 are housed. For this reason, in the present embodiment, as a structure for preventing the beams LB and the reflected light RL from entering the region where the battery cells 10 are housed, the light shielding portions 159 (also see Fig. 5) are formed at the bus bar holder 150, and light shielding walls 3011 are provided at the arms 300 of the sandwiching tools 30A, 30B. The light shielding wall 3011 is a front surface of the sandwiching portion 301. The thickness (i.e., the thickness of the arm 300) D1, D2 of the sandwiching portion 301 as the width dimension of the light shielding wall 3011 is set such that the light shielding wall 3011 covers the entire front surface of the slit opening 156b, 156c. A similar structure is also employed for the rear bus bar holder 160 and sandwiching tools arranged on the rear side.

### (First Variation)

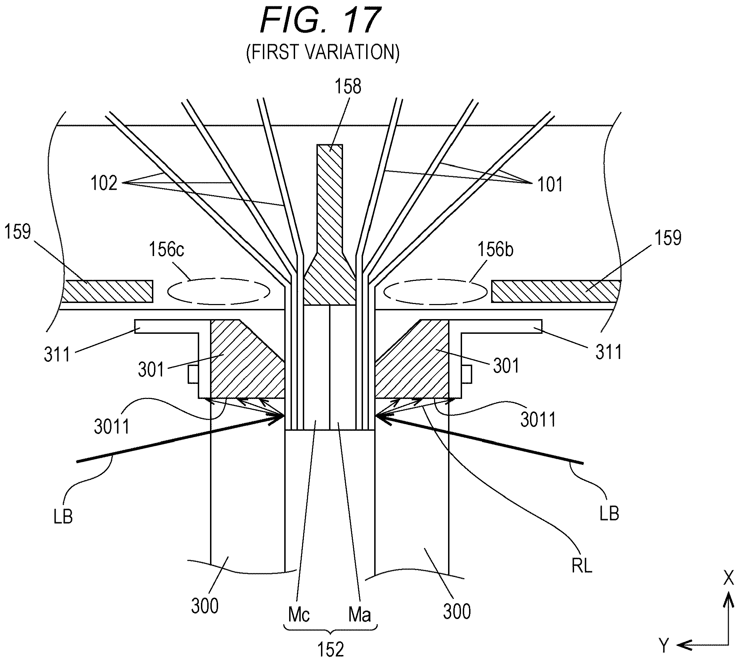

Fig. 17 shows a view of a variation regarding the sandwiching tool. In an example shown in Fig. 16, the arm 300 is set thick, and the light shielding wall 3011 covers the entire front surface of the slit opening 156b, 156c. On this point, the light shielding wall 3011 may have a light shielding structure shown in Fig. 17. In a first variation, the thickness of the arm 300 is set smaller to reduce a weight, and a light shielding wall 311 is provided separately from the sandwiching portion 301. In an example shown in Fig. 17, the light shielding wall 311 is bolted to the sandwiching portion 301. In this case, the light shielding walls 3011, 311 are configured to cover the entire front surface of the slit opening 156b, 156c. A similar structure is also employed for the sandwiching tools arranged on the rear side.

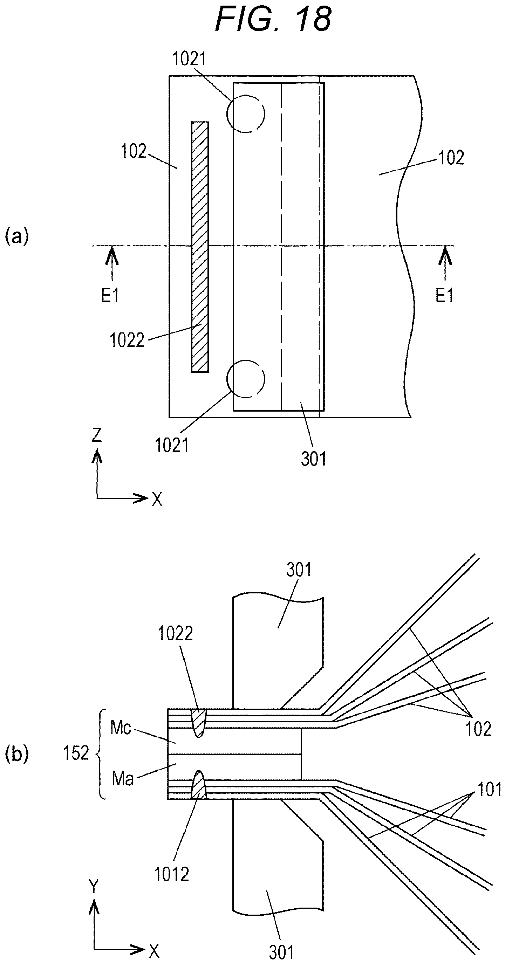

Fig. 18 shows schematic views of the state of a welding portion in the case of laser welding. Fig. 18(a) shows a plan view from the negative Y-direction. Fig. 18(b) shows an E1-E1 sectional view. As shown in Fig. 18(a), temporary fixing portions 1021 used for temporary fixing and a welding portion 1022 as a mark of laser beam welding are formed on surfaces of the negative electrode tabs 102. As shown in Fig. 18(b), similar temporary fixing portions 1011 (see Fig. 9(b)) and a similar welding portion 1012 are also formed on the positive electrode tabs 101 on the opposite side.

As shown in Fig. 18(b), the positive electrode tabs 101, the bus bar 152, and the negative electrode tabs 102 are collectively sandwiched by the sandwiching portions 301, and accordingly, the positive electrode tabs 101, the bus bar 152, and the negative electrode tabs 102 are stacked on each other without any clearance. The depth of penetration of the welding portion 1012 on the positive electrode tab 101 side reaches the aluminum material Ma of the bus bar 152. The depth of penetration of the welding portion 1022 on the negative electrode tab 102 side also reaches the copper material Mc of the bus bar 152. As described above, welding is performed in a state in which the positive electrode tabs 101, the bus bar 152, and the negative electrode tabs 102 are sandwiched by the sandwiching tool, and in this manner, the positive electrode tabs 101 and the negative electrode tabs 102 are welded to the bus bar 152 without any clearance and are firmly joined to the bus bar 152.

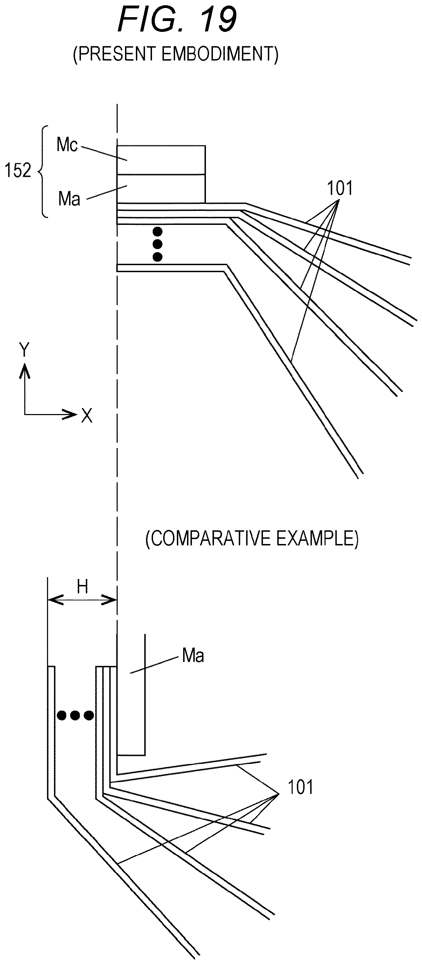

Fig. 19 shows a view of a tab connection structure of the present embodiment and a comparative example which is a tab connection structure similar to that of the invention described in Patent Literature 1 above. In the present embodiment, a tab connection surface of the bus bar 152 is set parallel with a surface (a plane parallel with an X-Z plane) of the battery cell 10. Thus, the multiple positive electrode tabs 101 to be connected to the surface of the aluminum material Ma of the bus bar 152 are stacked on each other in the Y-axis direction. Consequently, the dimension of the battery module 1 in the X-axis direction can be set constant regardless of the number of positive electrode tabs 101 stacked, i.e., the number of battery cells 10 arranged in parallel.

On the other hand, in the case of the comparative example, a tab connection surface of a bus bar (an aluminum material Ma) is parallel with a Y-Z plane. Thus, a height H from the tab connection surface to the uppermost positive electrode tab 101 changes according to the number of positive electrode tabs 101 stacked, i.e., the number of battery cells 10 arranged in parallel. As the number of battery cells 10 arranged in parallel increases, the dimension of the battery module 1 in the X-axis direction increases.

### (Second Variation)

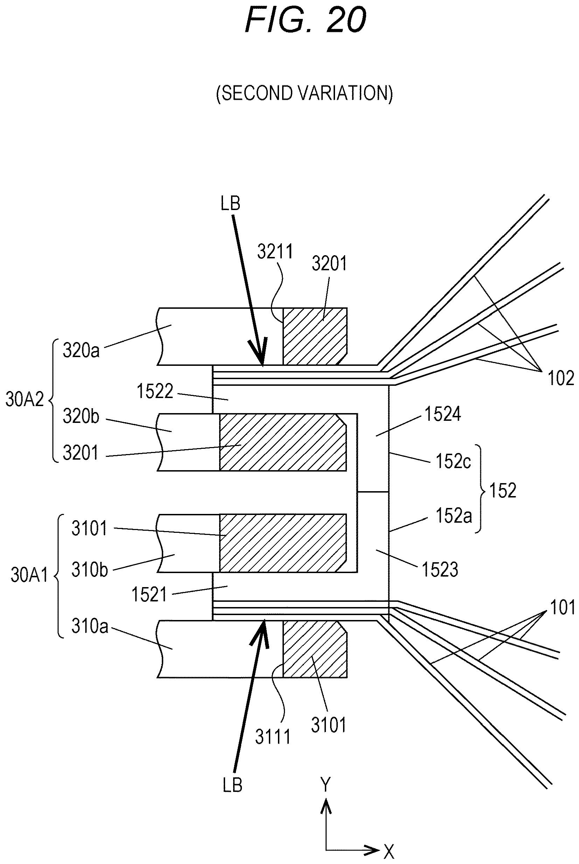

Fig. 20 shows a view for describing another variation regarding the sandwiching tool. In the above-described embodiment, the clad material of the plate-shaped aluminum material Ma and the plate-shaped copper material Mc joined so as to be stacked on each other is used for the bus bars 152 to 154, as shown in, e.g., Fig. 7. On the other hand, in a second variation, a clad material of an L-shaped aluminum material Ma and an L-shaped copper material Mc joined to each other is used for the bus bar 152. In Fig. 20, the bus bar 152 includes an L-shaped aluminum bus bar 152a and an L-shaped copper bus bar 152c. The aluminum bus bar 152a includes a tab connection portion 1521 to which the positive electrode tabs 101 are welded and a joint portion 1523 joined to the copper bus bar 152c. Similarly, the copper bus bar 152c includes a tab connection portion 1522 to which the negative electrode tabs 102 are welded and ajoint portion 1524 joined to the aluminum bus bar 152a.

As in the case of the above-described embodiment, a surface (a connection surface) of the tab connection portion 1521, 1522 to which the tabs are to be connected is set parallel with the surface (the plane parallel with the plane formed by the X-axis and the Z-axis) of the battery cell 10. The sectional shape is set to the shape as shown in Fig. 20 so that as compared to the case of stacking the plate-shaped aluminum material Ma and copper material Mc on each other, the weight of the structure can be reduced while the strength of the structure is ensured and the thicknesses of the aluminum material and the copper material can be decreased.

Upon welding of the positive electrode tabs 101 and the negative electrode tabs 102, the aluminum bus bar 152a and the positive electrode tabs 101 and the copper bus bar 152c and the negative electrode tabs 102 are sandwiched by different sandwiching tools 30A1, 30A2. The sandwiching tool 30A1 includes a pair of arms 310a, 310b, and sandwiching portions 3101 are each provided at tip ends of the arms 310a, 310b. A front surface of the sandwiching portion 3101 forms a light shielding wall 3111. The sandwiching tool 30A2 includes a pair of arms 320a, 320b, and sandwiching portions 3201 are each provided at tip ends of the arms 320a, 320b. A front surface of the sandwiching portion 3201 forms a light shielding wall 3211.

### (Third Variation)

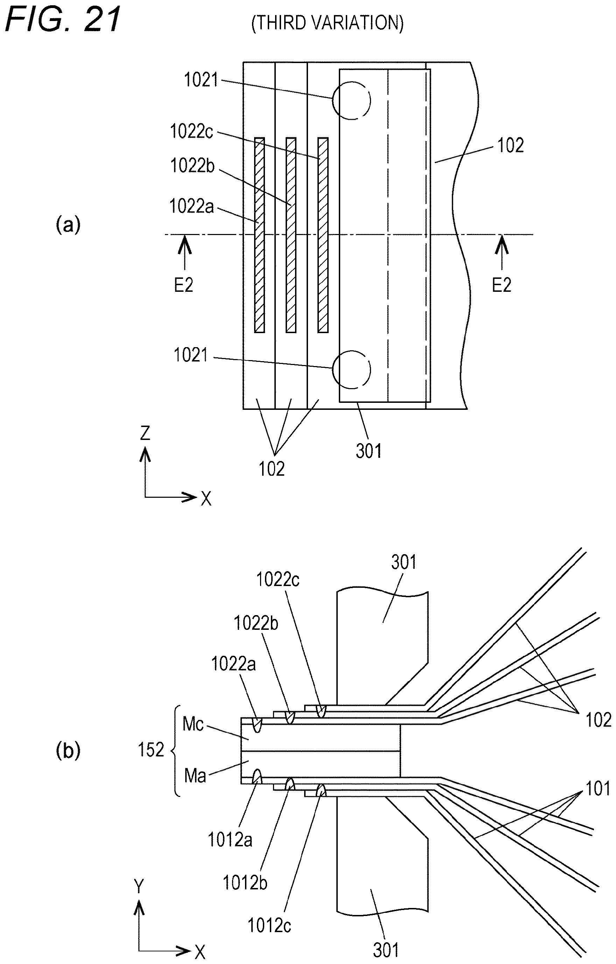

Fig. 21 shows views of a variation regarding the tab connection structure. The number of tabs to be connected to one surface of the bus bar is the number of battery cells 10 arranged in parallel. For example, in the case of the three-parallel eight-series form shown in Fig. 7, three tabs in a stacked state are connected to one surface of the tab. Thus, in the above-described embodiment, three tabs stacked on each other are welded to the bus bar 152 at the welding portion 1012, 1022, as shown in Fig. 18(b). The depth of penetration of the welding portion 1012, 1022 reaches the bus bar 152 from the uppermost tab.

On the other hand, in a third variation, tip ends of three negative electrode tabs 102 stacked on the copper material Mc of the bus bar 152 are arranged shifted from each other in the X-axis direction, as shown in Figs. 21(a) and 21(b). In this case, the positive electrode tabs 101, the bus bar 152, and the negative electrode tabs 102 are also clamped so as to be sandwiched by the sandwiching portions 301. Thus, a clamping strength is high, and the clearances between the tabs and between the tab and the bus bar can be prevented. The tab tip ends are shifted from each other as described above, and as shown in Fig. 12(b), the lowermost negative electrode tab 102 and the copper material Mc are welded to each other at a welding portion 1022a, the middle negative electrode tab 102 and the lowermost negative electrode tab 102 are welded to each other at a welding portion 1022b, and the uppermost negative electrode tab 102 and the middle negative electrode tab 102 are welded to each other at a welding portion 1022c. Similarly, in the case of the positive electrode tabs 101, the positive electrode tabs 101 are welded one by one at welding portions 1012a, 1012b, 1012c.

In the third variation, the tabs are welded one by one with the tab tip ends shifted from each other in the X-axis direction. Thus, the depth of penetration of the welding portion can be decreased as compared to the case of welding three tabs at the same time as shown in Fig. 18. Thus, poor welding due to an insufficient penetration depth can be prevented.

### (Fourth Variation)

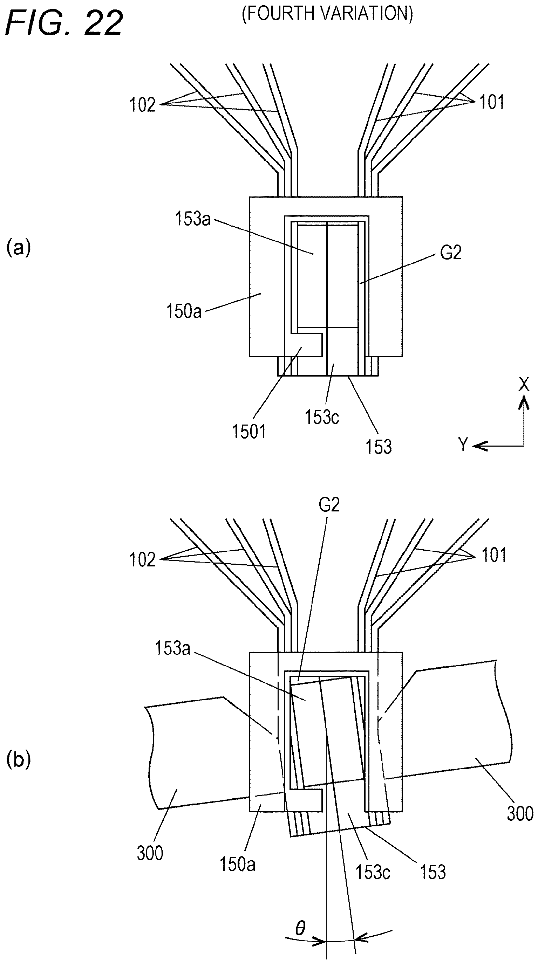

Fig. 22 shows views for describing a variation regarding the bus bar holding portion. As shown in Fig. 5, the upper and lower end portions of each of the bus bars 151 to 155 provided in the front bus bar module 15 are held by the bus bar holding portions 150a, 150b provided at the bus bar holder 150. The same also applies to the rear bus bar module 16, and each of the bus bars 161 to 164 is held by the bus bar holding portions 160a, 160b provided at the bus bar holder 160. In a fourth variation, a clearance G2 is formed between the bus bar holding portion 150a and the upper end portion 153a of the bus bar 153, as shown in Figs. 22(a) and 22(b). Note that although not shown in the figure, a clearance G2 similar to that for the bus bar holding portion 150a is also formed for the bus bar holding portion 150b holding the lower end portion 153b of the bus bar 153.

In the fourth variation, such a clearance G2 is provided such that position shift of the bus bar 153 relative to the bus bar holding portion 150a, 150b is allowed when the bus bar 153 is sandwiched by the arms 300 of the sandwiching tool 30B as in Fig. 12(b). If there is no clearance between the upper end portion 153a or the lower end portion 153b of the bus bar 153 and the bus bar holding portion 150a, 150b, when the arm positions and the position of the bus bar 153 are shifted from each other upon closing of the arms 300, force is applied to the bus bar holding portion 150a, 150b, and accordingly, the resin bus bar holding portion 150a, 150b might be damaged. In the fourth variation, the clearance G2 can absorb the shift among the arm positions and the bus bar position, and therefore, damage of the bus bar holding portion 150a, 150b can be prevented.

In the case of the fourth variation, the posture of the bus bar 153 can be, upon laser welding, adjusted such that the incident angle of the beam LB decreases. In the above-described embodiment, in a case where the positive electrode tabs 101 and the negative electrode tabs 102 are welded to the bus bar 153 by laser welding, the multiple bus bars are arranged in parallel in the Y-direction, and therefore, the positive electrode tabs 101 and the negative electrode tabs 102 need to be irradiated diagonally with the beams LB, as shown in Fig. 16. On the other hand, in the fourth variation, the angle θ of the bus bar 153 is adjusted in such a manner that the angle of each arm 300 of the sandwiching tool 30B is changed, as shown in Fig. 22(b). In this manner, the incident angle of the beam LB with respect to the negative electrode tab 102 can be as close as possible to zero. The angle θ is a change in the angle from a state shown in Fig. 22(a). For example, the clearance G2 is set so that the angle can be adjusted by about 1 degree. In the case of welding the positive electrode tabs 101, the bus bar 153 is tilted to the direction opposite to that of Fig. 22(b), and then, welding is performed.

Features and advantageous effects of the embodiment described above will be described.

(1) The battery module includes: the multiple battery cells 10 each of which has the positive electrode tab 101 and the negative electrode tab 102; the multiple bus bars 151 to 155 electrically connecting the battery cells 10 to each other; and the electrical insulating bus bar holder 150 holding the multiple bus bars 151 to 155 such that the bus bars 151 to 155 are provided apart from each other in parallel. As shown in Fig. 5, the bus bar holder 150 has, in the regions adjacent to the bus bars 151 to 155, the slit openings 156a to 156h through which the positive electrode tabs 101 and the negative electrode tabs 102 are drawn. The bus bars 151 to 155 include the plate-shaped tab connection portions 153c standing on the surface of the bus bar holder 150 opposite to the battery cells 10, i.e., the outer peripheral surface of the bus bar holder 150, and joined to the positive electrode tabs 101 and the negative electrode tabs 102.

The bus bar 153 to which the positive electrode tabs 101 and the negative electrode tabs 102 are to be connected stands on the outer peripheral surface of the bus bar holder 150. Thus, as shown in Fig. 12(b), the bus bar 153, the positive electrode tabs 101, and the negative electrode tabs 102 in the stacked state can be collectively sandwiched by the pair of sandwiching portions 301 provided at the sandwiching tool 30B. The multiple tabs (the positive electrode tabs 101, the negative electrode tabs 102) can be strongly pressed against the surfaces of the bus bar 153 by sandwiching by the sandwiching portions 301, and therefore, the clearances between the tabs stacked on each other and between the tab and the bus bar 153 stacked on each other can be prevented. As a result, a welding quality can be improved.

On the other hand, in the battery module of Patent Literature 1 described above, the back side of the tab joint surface of the bus bar is provided close to the surface of the bus bar holder. Thus, the bus bar and the tabs cannot be sandwiched by the tool. For preventing the clearances upon welding, welding needs to be performed while the tabs are pressed toward the bus bar by, e.g., the tool, for example. However, considering the strength of the bus bar holder made of, e.g., the resin material and a change in the angle of the tab surface with respect to the beam LB due to pressing, it is difficult to strongly press the tabs against the bus bar, and there is a probability that poor welding is caused.

(2) As shown in Fig. 11, the bus bar 153 is configured such that the tab connection portion of the aluminum material Ma and the tab connection portion of the copper material Mc are stacked on and joined to each other in the front-back direction, the positive electrode tabs 101 of the multiple battery cells 10 being to be connected to the tab connection portion of the aluminum material Ma, the negative electrode tabs 102 of the multiple battery cells 10 being to be connected to the tab connection portion of the copper material Mc. The bus bar holder 150 has the slit opening 156d formed in the region adjacent to the tab connection portion of the aluminum material Ma such that the positive electrode tabs 101 are drawn through the slit opening 156d and the slit opening 156e formed in the region adjacent to the tab connection portion of the copper material Mc such that the negative electrode tabs 102 are drawn through the slit opening 156e. Thus, when the bus bar holder 150 is attached to the panels of the housing, the positive electrode tabs 101 and the negative electrode tabs 102 can be drawn to the outside of the housing without contacting wall portions of the bus bar holder 150.

(3) As shown in Fig. 20, the bus bar 152 may include the L-shaped aluminum bus bar 152a and the L-shaped copper bus bar 152c, the aluminum bus bar 152a may include the tab connection portion 1521 to which the positive electrode tabs 101 of the multiple battery cells 10 are to be connected, the copper bus bar 152c may include the tab connection portion 1522 to which the negative electrode tabs 102 of the multiple battery cells 10 are to be connected, and the bus bar holder side end portions of the standing tab connection portions 1521, 1522 may be coupled to each other in such a manner that the joint portion 1523 of the aluminum bus bar 152a and the joint portion 1524 of the copper bus bar 152c are joined to each other. The bus bar 152 is formed in the shape as shown in Fig. 20, so that as compared to the case of stacking the plate-shaped aluminum material Ma and the plate-shaped copper material Mc on each other, the weight of the bus bar 152 can be reduced while the strength of the bus bar 152 is maintained and the thicknesses of the aluminum material and the copper material can be decreased.

(4) As shown in Fig. 11, the bus bar holder 150 may include the dividing portions 158 each of which protrudes from the battery-cell-10-side surface, i.e., the inner peripheral surface, of the bus bar holder 150 and is arranged between the positive electrode tab 101 and the negative electrode tab 102. Contact between the positive electrode tab 101 and the negative electrode tab 102 adjacent to each other is prevented by the dividing portion 158. The dividing portion 158 is provided on the rear side of the bus bar 152, and therefore, when the bus bar holder 150 is attached to the panels of the housing, enters between the positive electrode tab 101 and the negative electrode tab 102 to function as the guide for guiding the bus bar 152 to the side surfaces of the positive electrode tab 101 and the negative electrode tab 102.

(5) As shown in Fig.9, the multiple tabs (the positive electrode tabs 101) to be connected to the same tab connection portion of the bus bar (e.g., the aluminum material Ma of the bus bar 152) may be integrally stacked on each other by a temporary fixing mechanism (the temporary fixing portion 1011) such as swaging. Such machining is performed in advance, so that contact between adjacent tabs with different polarities and contact of the tabs with the peripheral component during an assembly process can be avoided.

(6) As shown in Fig. 16, the light shielding portions 159 for preventing laser light from entering the housing when the tabs (the positive electrode tabs 101, the negative electrode tabs 102) are welded to the bus bar 152 by lase welding may be provided at the bus bar holder 150. The light shielding portions 159 prevent the beams LB for welding and the reflected light RL from entering the housing.

(7) As shown in Fig. 21, the tip ends of the three negative electrode tabs 102 stacked on the copper material Mc of the bus bar 152 may be stacked and arranged so as to be shifted from each other in the X-axis direction which is the direction in which the bus bar 152 stands, and the tabs adjacent to each other in the stack direction may be welded to each other and the bus bar 152 and the tab adjacent thereto may be welded to each other. In this case, the tabs are welded one by one. As compared to the case of welding the three tabs at the same time as in Fig. 18, the depth of penetration of the welding portion can be decreased.

(8) As shown in Fig. 22, the upper end portion 153a and the lower end portion 153b, i.e., holding target portions, to be held by the bus bar holding portions 150a, 150b may be provided at both ends of the bus bar 153, the upper end portion 153a may be held by the ring-shaped bus bar holding portion 150a through the clearance G2, and the lower end portion 153b may be held by the ring-shaped bus bar holding portion 150b through the clearance G2. The upper end portion 153a and the lower end portion 153b are held through the clearances G2 as described above, so that application of force to the bus bar holding portions 150a, 150b when the bus bar 153 is held by the sandwiching tool 30B can be prevented. Moreover, by the sandwiching tool 30B, the angle of the bus bar 153 can be adjusted within the range acceptable by the clearance G2. Thus, the incident angle of the beam LB upon laser welding can be further decreased.

Various embodiments and variations thereof have been described above. Note that the present invention is not limited to the contents of these embodiments and variations. Other aspects conceivable within the scope of the technical idea of the present invention are also included in the scope of the present invention. For example, in the above-described embodiment, the tabs are welded to the bus bar by laser welding. On this point, a joint method is not limited to laser welding, and the present invention is also applicable in the case of using, e.g., seam joint, spot joint, or mechanical clinching. The configuration in which the bus bar modules are provided on both the front and rear sides of the battery module 1 as shown in Fig. 2 has been described as an example. On this point, the present invention is also similarly applicable to a battery module configured such that a bus bar module is provided only on one of the front or rear side.

### LIST OF REFERENCE SIGNS

1 Battery Module
10 Battery Cell
13 Side Panel
14a Bottom Panel
14b Top Panel
15 Front Bus Bar Module
16 Rear Bus Bar Module
100 Cell Body
101 Positive Electrode Tab
102 Negative Electrode Tab
150, 160Bus Bar Holder
150a, 150b, 160a, 160b Bus Bar Holding Portion
151 to 155, 161 to 164 Bus Bar
153c, 1521, 1522 Tab Connection Portion
158, 168Dividing Portion
159, 169Light Shielding Portion
300, 310a, 310b, 320a, 320b Arm
301, 3101, 3201 Sandwiching Portion
311, 3011, 3111, 3211 Light Shielding Wall
1011, 1021 Temporary Fixing Portion
156a to 156h, 166a to 166h Slit Opening
30A, 30B, 30A1, 30A2 Sandwiching Tool
BSS Cell Stack

## Claims

1. A battery module comprising:
multiple battery cells each of which has a positive electrode tab and a negative electrode tab;
multiple bus bars electrically connecting the battery cells to each other; and
an electrical insulating bus bar holding member holding the multiple bus bars such that the bus bars are provided apart from each other in parallel,
wherein the bus bar holding member has, in a region adjacent to each bus bar, an opening through which the tabs are drawn, and
each bus bar includes a plate-shaped tab connection portion standing on an outer peripheral surface of the bus bar holding member and joined to the tabs.

2. The battery module according to claim 1, wherein
the tab connection portion of the bus bar is configured such that a first tab connection portion and a second tab connection portion are stacked on and joined to each other in a front-back direction, the positive electrode tabs of the multiple battery cells being to be connected to the first tab connection portion, the second tab connection portion being made of a material different from that of the first tab connection portion, and the negative electrode tabs of the multiple battery cells being to be connected to the second tab connection portion, and
the opening of the bus bar holding member includes: a first opening formed in a region adjacent to the first tab connection portion such that the positive electrode tabs are drawn through the first opening; and a second opening formed in a region adjacent to the second tab connection portion such that the negative electrode tabs are drawn through the second opening.

3. The battery module according to claim 1, wherein
the tab connection portion of the bus bar includes:
a first tab connection portion to which the positive electrode tabs of the multiple battery cells are to be connected;
a second tab connection portion which is made of a material different from that of the first tab connection portion and to which the negative electrode tabs of the multiple battery cells are to be connected; and
a coupling portion coupling bus bar holding member side end portions of the standing first and second tab connection portions to each other.

4. The battery module according to any one of claims 1 to 3, wherein
the bus bar holding member includes a dividing portion protruding from a bus bar holding member inner peripheral surface and arranged between the positive electrode tab and the negative electrode tab.

5. The battery module according to any one of claims 1 to 4, wherein
the multiple tabs to be connected to the tab connection portion are integrally stacked on each other by a temporary fixing mechanism.

6. The battery module according to any one of claims 1 to 5, wherein
the tabs are connected to the tab connection portion by laser welding, and
the bus bar holding member includes a light shielding portion preventing laser light from entering a housing.

7. The battery module according to claim 6, wherein
the multiple tabs to be connected to the tab connection portion are stacked on each other so as to be shifted from each other in a tab connection portion standing direction, and
adjacent ones of the tabs in a stack direction are welded to each other, and the tab connection portion and one of the tabs adjacent thereto are welded to each other.

8. The battery module according to any one of claims 1 to 7, wherein
each bus bar includes a first holding target portion provided at one end of the plate-shaped tab connection portion and a second holding target portion provided at another end of the tab connection portion, and
the bus bar holding member includes a ring-shaped first holder holding the first holding target portion through a clearance and a ring-shaped second holder holding the second holding target portion through a clearance.

9. A battery module manufacturing method for manufacturing the battery module according to any one of claims 1 to 8, comprising:
sandwiching the tab connection portion and the multiple tabs by a sandwiching tool; and
welding the tab connection portion and the multiple tabs to each other with the tab connection portion and the multiple tabs sandwiched by the sandwiching tool.

10. The battery module manufacturing method according to claim 9, further comprising:
temporarily fixing the multiple tabs, which is to be connected to the tab connection portion, to integrally bundle the multiple tabs;
after the temporarily fixing, inserting temporarily-fixed portions of the multiple tabs into the opening of the bus bar holding member and drawing the temporarily-fixed portions to a region adjacent to each bus bar; and
welding the tab connection portion and the temporarily-fixed portions to each other with the tab connection portion and the temporarily-fixed portions sandwiched by the sandwiching tool.

11. The battery module manufacturing method according to claim 9 or 10, wherein
the welding the tab connection portion and the multiple tabs is performed by laser welding, and
reflected light toward the bus bar holding member from a welding portion is blocked by a light shielding wall provided at the sandwiching tool.
